# EUROPEAN PATENT SPECIFICATION

(11) **EP 3 382 137 B1**
(45) Date of publication and mention of the grant of the patent: **25.12.2019**
(21) Application number: 15904613.5
(22) Date of filing: 03.11.2015
(51) Int. Cl.: E06B 9/58, H02K 11/00, E06B 9/56, E06B 9/68

(54) **HALL-TYPE TRAVEL LIMIT DEVIATION SELF-RESETTING ENCODER FOR GARAGE DOOR MACHINE**
SELBSTRÜCKSETZENDER HALL-ENCODER ZUR ERFASSUNG VON ENDLAGEABWEICHUNGEN FÜR GARAGENTORANTRIEBE
CODEUR À RÉARMEMENT AUTOMATIQUE DE L'ÉCART DE FIN DE COURSE DE TYPE POUR MACHINE DE PORTE DE GARAGE

(30) Priority: 24.09.2015 CN 201520749650 U
(43) Date of publication of application: 03.10.2018
(73) Proprietor: Et Technology (Wuxi) Co., Ltd., Jiangsu 214112 (CN)
(72) Inventor: SHAO, Wenying, Wuxi Jiangsu 214112 (CN)
(74) Representative: Hanna Moore + Curley
(86) International application number: PCT/CN2015/093650
(87) International publication number: WO 2017/049738

(56) References cited:
- EP-A1- 1 245 763
- EP-A1- 1 245 763
- CN-U- 202 696 369
- CN-Y- 201 381 734
- US-A1- 2007 000 622

## Description

### TECHNICAL FIELD OF THE INVENTION

The present invention relates to an encoder, and in particular, to a Hall-type travel limit deviation self-resetting encoder of a garage door machine, belonging to the field of garage door machine limit technology.

### BACKGROUND

Nylon worm gear reduction type worm and worm gear garage door motor has the advantages of low noise, high efficiency and good consistency. However, in a halted state, if the output shaft is added with a large torque, the worm may be driven to rotate, and the self-locking capability of the garage door motor is poor, the conventional Hall pulse accumulative counting limit method of the worm shaft will cause travel limit deviation of the garage door machine and then the garage door machine cannot be used.

In order to limit the travel limit deviation of the garage door machine, it is a conventional practice to set a reference point at a proper position of the track chain or the synchronous belt which is always synchronized with the garage door body, and install an adapted reference point switch at a suitable position of the motor. When the stroke of the garage door is set, the reference point pulse position and the limit counting pulse maintain a certain pulse number interval. When the garage door is subjected to strong torsion in a halted state, the travel limit deviation occurs, the relative number of reference point pulses and limit counting pulses at this point will be deviated; in this case, the travel limit deviation can be prevented if the original number of pulse intervals is restored when passing the reference point in the next run. Such garage door machine is known for example from US2007/0000622A.

The practice of preventing travel limit deviation with a reference point is intuitive and effective, however, since the reference point and the reference point switch are added, the production and user installation become cumbersome, and costs are high.

### SUMMARY

In order to overcome the disadvantages in the prior art, there is provided a Hall-type travel limit deviation self-resetting encoder of a garage door machine, and the encoder is compact in structure, low in cost, high in control precision, safe and reliable, and can effectively limit the travel limit deviation of a garage door.

According to technical solutions provided by the present invention, the Hall-type travel limit deviation self-resetting encoder for a garage door machine includes a nylon worm gear and a driving motor which is driving the nylon worm gear to rotate; the encoder further includes a motor rotation counting limit mechanism adapted for performing rotation counting limit on a rotor shaft of the driving motor, and a worm gear counting calibration mechanism adapted for calibrating the travel limit deviation of the driving motor; the worm gear counting calibration mechanism includes a worm gear magnet mounted on the nylon worm gear and a worm gear position Hall element adapted to detect the worm gear magnet.

The motor rotation counting limit mechanism includes a motor magnet mounted on the rotor shaft of the driving motor and a motor position Hall element adapted to cooperate with the motor magnet.

Preferably the nylon worm gear is mounted within a worm gear housing, the worm gear housing is provided with a worm gear cover matched with the worm gear housing, and the motor position Hall element and the worm gear position Hall element are mounted on the worm gear cover.

Preferably both the motor position Hall element and the worm gear position Hall element are located on a Hall circuit board, and the Hall circuit board is embedded in a circuit board mounting groove of the worm gear cover.

Preferably the worm gear cover is provided with a circuit board cover plate adapted to the Hall circuit board and the circuit board mounting groove.

Advantages of the present invention: by constituting a motor rotation counting limit mechanism with a motor magnet located on the rotor shaft of the driving motor and a matched motor position Hall element, and calibrating travel limit deviation through cooperation of the worm gear position Hall element and the worm gear magnet 3 on the motor position Hall element, the encoder in the present invention can effectively limit the travel limit deviation of a garage door, is compact in structure, low in cost, high in control precision, safe and reliable.

### BRIEF DESCRIPTION OF THE DRAWINGS

FIG. 1 is a schematic diagram showing the structure of the present invention.
FIG. 2 is a schematic diagram showing the position of the worm gear magnet on the nylon worm gear according to the present invention.

Description of reference numerals: 1- driving motor, 2- worm gear housing, 3-motor magnet, 4- worm gear magnet, 5- nylon worm gear, 6- circuit board mounting groove, 7- Hall circuit board, 8- motor position Hall element, 9- worm gear position Hall element, 10-circuit board cover plate and 11- worm gear cover.

### DETAILED DESCRIPTION OF THE INVENTION

Hereinafter, the present invention will be described in detail with reference to accompanying drawings and specific embodiments.

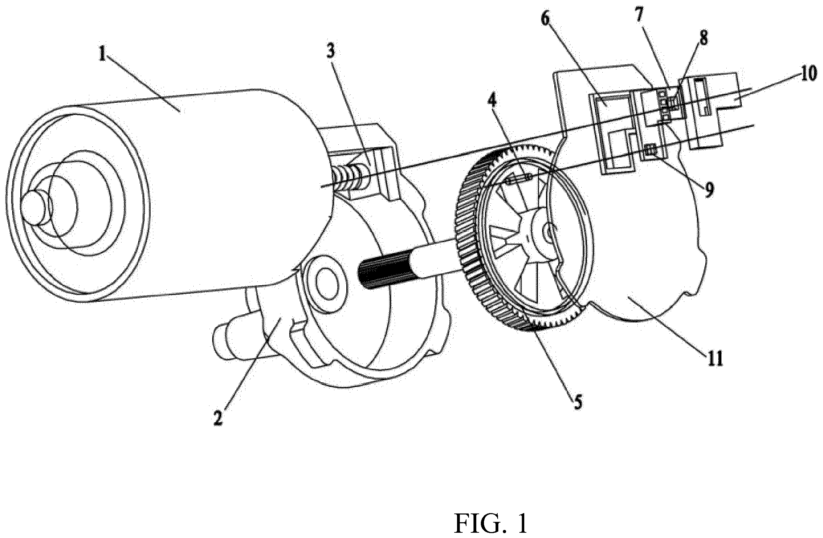

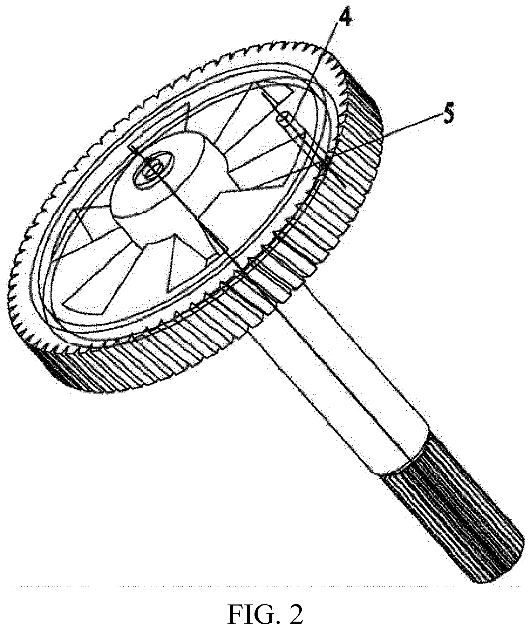

As shown in FIG. 1 and FIG. 2: in order to effectively limit the travel limit deviation of a garage door, the encoder of the present invention includes a nylon worm gear 5 and a driving motor 1 for driving the nylon worm gear 5 to rotate; the encoder further includes a motor rotation counting limit mechanism for performing rotation counting limit on a rotor shaft of the driving motor 1, and a worm gear counting calibration mechanism for calibrating the travel limit deviation of the driving motor 1; the worm gear counting calibration mechanism includes a worm gear magnet 4 mounted on the nylon worm gear 5 and a worm gear position Hall element 9 adapted to detect the worm gear magnet 4.

Particularly, the nylon worm gear 5 is mounted within a worm gear housing 2, the worm gear housing 2 is provided with a worm gear cover 11 matched with the worm gear housing 2, and the motor position Hall element 8 and the worm gear position Hall element 9 are mounted on the worm gear cover 11. The motor rotation counting limit mechanism is configured to count revolutions of the rotor shaft of the driving motor 1, and the position of the garage door can be determined by the count value of the motor rotation counting limit mechanism, and thus an effective limit position of the garage door can be determined.

Because conditions of using a garage door machine vary greatly, additional strong torsion, severe imbalance of the door body installation weight, long-term accumulation and other factors may cause travel limit deviation. In order to calibrate the limit position of the motor rotation counting limit mechanism and avoid influences caused by the travel limit deviation, a worm gear counting calibration mechanism is adapted to calibrate the deviation, a worm gear magnet 4 is mounted on the nylon worm gear 5, when the worm gear magnet 4 rotates together with the nylon worm gear 5, the worm gear position Hall element 9 located in the rotational tangential direction of the worm gear magnet 4 can detect the worm gear magnet 4 and generate a corresponding pulse, thereby detecting the rotational position of the nylon worm gear 5, the motor rotation counting limit mechanism is calibrated with the pulse value obtained by detecting the position of the nylon worm gear 5, which can effectively limit the travel limit deviation of the garage door.

Further, the motor rotation counting limit mechanism includes a motor magnet 3 mounted on the rotor shaft of the driving motor 1 and a motor position Hall element 8 adapted to the motor magnet 3.

In embodiments of the present invention, the rotor shaft of the driving motor 1 protrudes into the worm gear housing 2, that is, the motor magnet 3 is located in a region between the worm gear housing 2 and the worm gear cover 11, and the motor magnet 3 can follow the rotation of the rotor shaft of the driving motor 1. The motor position Hall element 8 cooperates with the motor magnet 3. After the motor magnet 3 rotates, the motor position Hall element 8 can determine the number of revolutions of the rotor shaft of the driving motor 1 by the cooperative relationship with the motor magnet 3, for example, if 0 pulse of the motor position Hall element 8 is determined as a door opening position, when the counting pulse reaches N, then N pulse can be determined as a door closing position, and the specific size of the counting pulse N can be determined as desired, which is well known to those skilled in the art, and is not repeatedly described here. The cooperative relationship between the motor position Hall element 8 and the motor magnet 3, and the cooperative relationship between the worm gear position Hall element 9 and the worm gear magnet 4 are both well known to those skilled in the art.

When the driving motor 1 and the nylon worm gear 5 rotate to work, the motor position Hall element 8 and the worm gear position Hall element 9 do not interfere with each other. When the travel limit deviation occurs, the pulse difference between the counting pulse of the motor position Hall element 8 and the worm gear position Hall element 9 changes, and the limit position can be calibrated by adjusting the pulse difference. Each travel limit deviation of the driving motor 1 is slight, and can be detected by the worm gear position Hall element 9, and the stroke corresponding to one rotation of the driving motor 1 is 125 mm-144 mm, and the case that the driving motor fails to be calibrated after the travel limit deviation is substantially unlikely to occur, unless man-made damage or serious structural failure.

Both the motor position Hall element 8 and the worm gear position Hall element 9 are located on a Hall circuit board 7, and the Hall circuit board 7 is embedded in a circuit board mounting groove 6 of the worm gear cover 11.

The worm gear cover 11 is provided with a circuit board cover plate 10 adapted to the Hall circuit board 7 and the circuit board mounting groove 6.

In embodiments of the present invention, both the motor position Hall element 8 and the worm gear position Hall element 9 are fixedly arranged on the Hall circuit board 7, and the Hall circuit board 7 is located in a circuit board mounting groove 6, the circuit board cover plate 10 caps and seals the Hall circuit board 7, and the Hall circuit board 7 can facilitate to output impulse of the motor position Hall element 8 and the worm gear position Hall element 9. In specific implementation, the motor position Hall element 8 and the worm gear position Hall element 9 can be located on the same Hall circuit board 7 or two different Hall circuit boards 7, respectively, and the Hall circuit board 7 can be a PCB board; of course, the Hall circuit board 7 also can be mounted on other positions of the worm gear cover 11 or other desired positions other than the worm gear cover 11.

By constituting a motor rotation counting limit mechanism with a motor magnet 3 located on the rotor shaft of the driving motor 1 and a matched motor position Hall element 8, and calibrating travel limit deviation through cooperation of the worm gear position Hall element 9 and the worm gear magnet 3 on the motor position Hall element 8, the encoder in the present invention can effectively limit the travel limit deviation of a garage door, is compact in structure, low in cost, high in control precision, safe and reliable.

## Claims

1. A Hall-type travel limit deviation self-resetting encoder for a garage door machine, comprising a nylon worm gear (5) and a driving motor (1) for driving the nylon worm gear (5) to rotate;
**characterized by** further comprising:
a motor rotation counting limit mechanism adapted for performing rotation counting limit on a rotor shaft of the driving motor (1), and a worm gear counting calibration mechanism adapted for calibrating the travel limit deviation of the driving motor; the worm gear counting calibration mechanism comprises a worm gear magnet (4) mounted on the nylon worm gear (5) and a worm gear position Hall element (9) adapted to detect the worm gear magnet (4) and
in that, the motor rotation counting limit mechanism comprises a motor magnet (3) mounted on the rotor shaft of the driving motor (1) and a motor position Hall element (8) adapted to cooperate with the motor magnet (3).

2. The Hall-type travel limit deviation self-resetting encoder for a garage door machine according to claim 1, **characterized in that**, the nylon worm gear (5) is mounted within a worm gear housing (2), the worm gear housing (2) is provided with a worm gear cover (11) matched with the worm gear housing (2), and the motor position Hall element (8) and the worm gear position Hall element (9) are mounted on the worm gear cover (11).

3. The Hall-type travel limit deviation self-resetting encoder for a garage door machine according to claim 2, **characterized in that**, both the motor position Hall element (8) and the worm gear position Hall element (9) are located on a Hall circuit board (7), and the Hall circuit board (7) is embedded in a circuit board mounting groove (6) of the worm gear cover (11).

4. The Hall-type travel limit deviation self-resetting encoder for a garage door machine according to claim 3, **characterized in that**, the worm gear cover (11) is provided with a circuit board cover plate (10) adapted to the Hall circuit board (7) and the circuit board mounting groove (6).

## Patentansprüche

1. Selbstrücksetzender Hall-Encoder für Endlageabweichungen für einen Garagentorantrieb, umfassend ein Nylon-Schneckengetriebe (5) und einen Antriebsmotor (1) für das Antreiben des Nylon-Schneckengetriebes (5) zum Drehen;
**dadurch gekennzeichnet, dass** er weiter umfasst:
einen Mechanismus für einen Endwert der Anzahl von Umdrehungen des Motors, der zum Durchführen eines Endwerts der Anzahl von Umdrehungen an einer Rotorwelle des Antriebsmotors (1) ausgelegt ist, und einen Zählungskalibriermechanismus des Schneckengetriebes, der zum Kalibrieren der Endlageabweichung des Antriebsmotors ausgelegt ist; wobei der Zählungskalibriermechanismus des Schneckengetriebes einen Schneckengetriebemagneten (4), der an dem Nylon-Schneckengetriebe (5) angebracht ist, und ein Hall-Positionselement (9) des Schneckengetriebes umfasst, das zum Detektieren des Schneckengetriebemagneten (4) ausgelegt ist, und
dadurch, dass der Mechanismus für den Endwert der Anzahl von Umdrehungen des Motors einen Motormagneten (3), der an der Rotorwelle des Antriebsmotors (1) angebracht ist, und ein Hall-Positionselement (8) des Motors umfasst, das zum Zusammenwirken mit dem Motormagneten (3) ausgelegt ist.

2. Selbstrücksetzender Hall-Encoder für Endlageabweichungen für einen Garagentorantrieb nach Anspruch 1, **dadurch gekennzeichnet, dass** das Nylon-Schneckengetriebe (5) in einem Schneckengetriebegehäuse (2) angebracht ist, wobei das Schneckengetriebegehäuse (2) mit einer Schneckengetriebeabdeckung (11) versehen ist, die auf das Schneckengetriebegehäuse (2) abgestimmt ist, und das Hall-Positionselement (8) des Motos und das Hall-Positionselement (9) des Schneckengetriebes an der Schneckengetriebeabdeckung (11) angebracht sind.

3. Selbstrücksetzender Hall-Encoder für Endlageabweichungen für einen Garagentorantrieb nach Anspruch 2, **dadurch gekennzeichnet, dass** sowohl das Hall-Positionselement (8) des Motos als auch das Hall-Positionselement (9) des Schneckengetriebes auf einer Hall-Schaltplatte (7) angeordnet sind und die Hall-Schaltplatte (7) in einer Schaltplattenmontagerille (6) der Schneckengetriebeabdeckung (11) eingebettet ist.

4. Selbstrücksetzender Hall-Encoder für Endlageabweichungen für einen Garagentorantrieb nach Anspruch 3, **dadurch gekennzeichnet, dass** die Schneckengetriebeabdeckung (11) mit einer Schaltplatten-Abdeckplatte (10) versehen ist, die an die Hall-Schaltplatte (7) und die Schaltplattenmontagerille (6) angepasst ist.

## Revendications

1. Codeur à réarmement automatique de l'écart de fin de course de type à effet Hall pour une machine de porte de garage, comprenant une vis sans fin en nylon (5) et un moteur d'entraînement (1) pour entraîner la vis sans fin en nylon (5) en rotation ;
**caractérisé par le fait qu'**il comprend en outre :
un mécanisme de limitation de comptage de rotation de moteur adapté pour réaliser une limitation de comptage de rotation sur un arbre de rotor du moteur d'entraînement (1), et un mécanisme d'étalonnage de comptage de vis sans fin adapté pour étalonner l'écart de fin de course du moteur d'entraînement ; le mécanisme d'étalonnage de comptage de vis sans fin comprend un aimant de vis sans fin (4) monté sur la vis sans fin en nylon (5) et un élément à effet Hall de position de vis sans fin (9) adapté pour détecter l'aimant de vis sans fin (4), et
**par le fait que** le mécanisme de limitation de comptage de rotation de moteur comprend un aimant de moteur (3) monté sur l'arbre de rotor du moteur d'entraînement (1) et un élément à effet Hall de position de moteur (8) adapté pour coopérer avec l'aimant de moteur (3).

2. Codeur à réarmement automatique de l'écart de fin de course de type à effet Hall pour une machine de porte de garage selon la revendication 1, **caractérisé par le fait que** la vis sans fin en nylon (5) est montée à l'intérieur d'un logement de vis sans fin (2), le logement de vis sans fin (2) comportant un couvercle de vis sans fin (11) accouplé au logement de vis sans fin (2), et l'élément à effet Hall de position de moteur (8) et l'élément à effet Hall de position de vis sans fin (9) sont montés sur le couvercle de vis sans fin (11).

3. Codeur à réarmement automatique de l'écart de fin de course de type à effet Hall pour une machine de porte de garage selon la revendication 2, **caractérisé par le fait que** l'élément à effet Hall de position de moteur (8) et l'élément à effet Hall de position de vis sans fin (9) sont tous les deux placés sur une carte de circuit à effet Hall (7), et la carte de circuit à effet Hall (7) est incorporée dans une rainure de montage de carte de circuit (6) du couvercle de vis sans fin (11).

4. Codeur à réarmement automatique de l'écart de fin de course de type à effet Hall pour une machine de porte de garage selon la revendication 3, **caractérisé par le fait que** le couvercle de vis sans fin (11) comporte une plaque de couvercle de carte de circuit (10) adaptée sur la carte de circuit à effet Hall (7) et la rainure de montage de carte de circuit (6).
